(19) Europäisches Patentamt European Patent Office Office européen des brevets

(11) **EP 2 428 818 A1**

(12) **DEMANDE DE BREVET EUROPEEN**

(43) Date de publication:
**14.03.2012 Bulletin 2012/11**

(51) Int Cl.:
***G01S 19/20*** *(2010.01)*

(21) Numéro de dépôt: **11180512.3**

(22) Date de dépôt: **08.09.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **10.09.2010 FR 1003630**

(71) Demandeur: **Thales**
**92200 Neuilly Sur Seine (FR)**

(72) Inventeurs:
• **Van Den Bossche, Mathias**
**31120 Goyrans (FR)**
• **Dall Orso, Mickael**
**92200 Neuilly sur Seine (FR)**

(74) Mandataire: **Brunelli, Gérald et al**
**Marks & Clerk France**
**Immeuble Visium**
**22, avenue Aristide Briand**
**94117 Arcueil Cedex (FR)**

(54) **Procédé de correction d'estimation de position par sélection de mesures de pseudo-distances**

(57) L'invention a pour objet un procédé de correction d'estimation de position, une position améliorée $X_{huber}$ étant déterminée par application d'un algorithme d'estimation robuste (104) utilisant N mesures (102) de pseudo-distances $\rho_i$ correspondant à la distance mesurée entre un récepteur de navigation et N satellites ainsi qu'une estimation $X_{prim}$ de la position dudit récepteur (103) réalisée par ledit récepteur. Le procédé comporte au moins les étapes suivantes : une étape de détermination de valeurs de résidus normés $\Delta r^i_{huber}$ à partir des résidus $\Delta\rho^i_{huber}$ de pseudo-distances des mesures $\rho_i$, une étape de détermination (111) de $\Sigma$ sous-ensembles (105, 106), un sous-ensemble comportant N-k valeurs de résidus normés $\Delta r^i_{huber}$, k étant un entier strictement supérieur à 1, une étape de sélection du sous-ensemble SEO dont l'écart type $\sigma_{SEO}$ est le plus faible, une étape de sélection de mesures non aberrantes (107), une mesure étant sélectionnée si la différence entre les résidus normés $\Delta r^i_{huber}$ et la moyenne $\mu_{SGO}$ des résidus normés du sous-ensemble SEO est inférieure à une valeur de seuil prédéfinie $T_1$, une étape de détermination d'une estimation corrigée $X_{cln}$ de la position à partir des mesures sélectionnées

FIG.1

EP 2 428 818 A1

**Description**

L'invention concerne un procédé de correction d'estimation de position par sélection de mesures de pseudo-distances et un récepteur mettant en oeuvre le procédé. Elle s'applique notamment au domaine des systèmes de navigation par satellite.

Les systèmes de positionnement par satellites sont habituellement désignés par l'acronyme GNSS venant de l'expression anglaise « Global Navigation Satellite System ». Ce type de système permet d'estimer la position d'un terminal à l'aide d'un récepteur de navigation embarqué. Ce récepteur réalise des mesures sur des signaux lui parvenant, lesdits signaux étant émis par une pluralité de satellites. Ces mesures correspondent par exemple à des pseudo-distances, c'est-à-dire des mesures de la distance entre le satellite à l'instant d'émission du signal et le récepteur à l'instant de réception du signal.

La position estimée par le récepteur de navigation n'est pas toujours exacte. Afin de tenir compte du manque de précision du positionnement, il est habituel de définir un rayon de protection autour de la position estimée.

Différents types d'erreurs peuvent dégrader la précision des mesures. Ces erreurs peuvent être classées en deux catégories : les erreurs nominales et les erreurs non-nominales.

Les erreurs nominales sont des erreurs de mesure résultant de perturbations intervenant pendant un fonctionnement normal du système. A titre d'exemple, l'horloge utilisée par un émetteur embarqué dans un satellite a un comportement qui n'est pas totalement prédictible. La précision d'estimation peut également être affectée par l'environnement au voisinage du récepteur. D'autres formes d'erreurs nominales sont dues aux réflexions des signaux satellites sur le sol ou sur des immeubles au voisinage du récepteur. On peut aussi mentionner les phénomènes météorologiques ou ionosphériques pouvant introduire un retard dans la propagation des signaux à mesurer.

Les erreurs non-nominales sont, quant à elles, le résultat d'un disfonctionnement du système. Les mesures affectées de telles erreurs sont également appelées mesures aberrantes dans la suite de la description.

Afin de limiter l'incidence de ces erreurs de mesure sur la précision de l'estimation de position, des moyens permettant d'identifier de telles erreurs pour les éliminer et permettant de calculer une borne sur l'erreur de position en fonction des mesures disponibles sont habituellement mis en oeuvre et sont désignés par l'acronyme RAIM venant de l'expression anglaise « Receiver Autonomous Integrity Monitoring ».

Les équipements de positionnement actuels comprenant des fonctionnalités RAIM souffrent de plusieurs problèmes.

Un premier problème est que ces équipements sont complètement intégrés, ce qui signifie qu'il n'est pas possible de choisir séparément l'équipement qui acquiert le signal de navigation et celui qui calcule la position de l'équipement qui assure les fonctions d'intégrité.

Un second problème est que ces équipements sont habituellement basés sur des algorithmes de type moindres carrés. Cela a pour conséquence que ces équipements sont déstabilisés par la présence de mesures erronées résultant d'erreurs non-nominales et/ou d'une modélisation imparfaite de l'erreur quelle que soit l'amplitude de l'erreur qui affecte ces mesures. Les solutions ainsi proposées sont alors peu fiables face à de telles erreurs.

Des méthodes d'estimation robustes telles que l'utilisation de l'algorithme de Huber permettent d'améliorer la précision d'estimation en présence de mesures aberrantes, mais l'effet de ces erreurs n'est malgré tout pas négligeable.

Un but de l'invention est notamment de pallier les inconvénients précités.

A cet effet l'invention a pour objet un procédé de correction d'estimation de position, une position améliorée $\mathbf{X}_{huber}$ étant déterminée par application d'un algorithme d'estimation robuste utilisant N mesures de pseudo-distances $\rho_i$ correspondant à la distance mesurée entre un récepteur de navigation et N satellites ainsi qu'une estimation $\mathbf{X}_{prim}$ de la position dudit récepteur réalisée par ledit récepteur. Le procédé comporte au moins les étapes suivantes :

- détermination de valeurs de résidus normés $\Delta r^i_{huber}$ à partir des résidus $\Delta \rho^i_{huber}$ de pseudo-distances des mesures $\rho_i$ ;
- détermination de $\Sigma$ sous-ensembles, un sous-ensemble comportant N-k valeurs de résidus normés $\Delta r^i_{huber}$, k étant un entier strictement supérieur à 1 ;
- sélection du sous-ensemble SEO dont l'écart type $\sigma_{SEO}$ est le plus faible ;
- sélection de mesures non aberrantes, une mesure étant sélectionnée si la différence entre les résidus normés $\Delta r^i_{huber}$ et la moyenne $\mu_{SGO}$ des résidus normés du sous-ensemble SEO est inférieure à une valeur de seuil prédéfinie $T_1$ ;
- détermination d'une estimation corrigée $X_{cln}$ de la position à partir des mesures sélectionnées.

Selon un aspect de l'invention, l'algorithme d'estimation robuste est l'algorithme de Huber.

L'algorithme de Huber est, par exemple, initialisé en utilisant la position $\mathbf{X}_{prim}$.

Dans un mode de réalisation, es résidus $\Delta \rho^i_{huber}$ sont déterminés en utilisant l'expression suivante :

$$\Delta\rho^i{}_{huber} = \delta(\mathbf{X}^i{}_{sat} - \mathbf{X}_{huber})$$

dans laquelle :

$\mathbf{X}^i{}_{sat}$ représente la position du i-ème satellite, ladite position étant par exemple communiquée au récepteur en utilisant un canal de signalisation ;
$\delta(\mathbf{X}^i{}_{sat} - \mathbf{X}_{huber})$ représente l'écart entre l'estimation de la différence $(\mathbf{X}^i{}_{sat} - \mathbf{X}_{huber})$ et la pseudo-distance mesurée $\rho_i$.

Selon une forme avantageuse de l'invention, la position $X_{cln}$ est déterminée en utilisant une méthode de type moindres carrés ou une méthode d'estimation robuste.

Les résidus normés $\Delta r^i{}_{huber}$ peuvent être déterminés en utilisant l'expression suivante :

$$\Delta r^i{}_{huber} = \Delta\rho^i{}_{huber} / \sigma_i$$

dans laquelle :

$\sigma_i$ représente les variances a priori des erreurs de mesures.

Selon un aspect de l'invention, le nombre $\Sigma$ de sous-ensembles correspond au nombre de combinaisons de (N-k) mesures parmi N.

Par ailleurs, l'invention prévoit une étape de détermination de N résidus $\Delta r^i{}_{cln}$ de pseudo distances, l'expression suivante étant utilisée :

$$\Delta r^i{}_{cln} = \delta (\mathbf{X}^i{}_{sat} - \mathbf{X}_{cln}) / \sigma_i$$

dans laquelle
$\delta (\mathbf{X}^i{}_{sat} - \mathbf{X}_{cln})$ représente l'écart entre l'estimation de la différence $(\mathbf{X}^i{}_{sat} - \mathbf{X}_{cln})$ et la pseudo-distance mesurée $\rho_i$.

Le procédé comporte par exemple une deuxième étape de sélection de mesures $\rho_i$ parmi les mesures déjà sélectionnées, lesdites mesures étant sélectionnées si l'expression suivante est vérifiée :

$$| \Delta r^i{}_{cln} - \Delta r^i{}_{huber} | < T_2$$

dans laquelle $T_2$ est une valeur de seuil prédéterminée.

Dans un mode de mise en oeuvre, une estimation robuste de position $X_{rob}$ est estimée en appliquant la méthode des moindres carrés aux mesures sélectionnées durant la deuxième étape de sélection.

Une valeur de rayon de détection est déterminée, par exemple, sur la base des mesures sélectionnées durant la deuxième étape de sélection.

L'invention concerne également un récepteur de navigation mettant en oeuvre le procédé décrit précédemment.

Avantageusement, le procédé permet d'optimiser le choix du matériel d'acquisition du signal de navigation indépendamment du matériel réalisant le traitement RAIM. De plus, le procédé RAIM robuste permet de fiabiliser l'estimation du la position tout en améliorant les performances d'intégrité en terme de détection par rapport à un RAIM standard.

D'autres caractéristiques et avantages de l'invention apparaîtront à l'aide de la description qui suit donnée à titre illustratif et non limitatif, faite en regard des dessins annexés parmi lesquels :

-    la figure unique présente un diagramme simplifié du procédé un procédé d'estimation de la position d'un récepteur de navigation par sélection de mesures de pseudo-distances.

Le procédé se base sur des données transmises par un récepteur primaire 100, c'est-à-dire un récepteur de navigation classique ne mettant pas en oeuvre ledit procédé. Ces données correspondent d'une part à la solution estimée 101 par le récepteur primaire et d'autre part aux mesures de pseudo-distance 102 obtenues par traitement de signaux en provenance de N satellites. La solution estimée par le récepteur primaire correspond à la position estimée du récepteur notée $\mathbf{X}_{prim}$ ainsi qu'au décalage d'horloge estimé. Les N mesures 102 de pseudo-distances notées $\rho_i$ correspondent

à la distance mesurée entre le récepteur et les N satellites, i correspondant à l'indice d'un satellite parmi les N satellites sur lesquelles des mesures sont effectuées.

Si les mesures transmises par le récepteur primaire ne sont pas prétraitées, il convient de leur faire subir un prétraitement, connu en soi, les affranchissant des erreurs de propagation et de mesures, comme symbolisé par le rectangle 103 en traits interrompus.

Un premier traitement 104 appliqué aux solutions 101 et mesures 102 mentionnées précédemment vise à déterminer une position améliorée du récepteur par l'utilisation d'une méthode d'estimation robuste, c'est-à-dire une méthode efficace en présence d'erreurs non-nominales. Une méthode robuste pouvant être employée dans le cadre de l'invention est la méthode dite de Huber. Cette méthode est exposée dans l'article de X. W. Chang et Y. Guo intitulé Huber's M-estimation in relative GPS positioning: computational aspects, Journal of Geodesy, 2005, vol. 79, no6-7, pp. 351-362. Le principe de cette méthode est de pondérer les mesures $\rho_i$ par une fonction du résidu de mesures vis-à-vis de la position en cours de calcul. Ce calcul peut être initialisé en utilisant par exemple la position $\mathbf{X}_{prim}$ déterminée par le récepteur primaire. Il en résulte une position améliorée notée $\mathbf{X}_{huber}$ et un jeu de résidus de pseudo-distances. Les résidus sont notés $\Delta\rho^i_{huber}$ et sont déterminés, par exemple, en utilisant l'expression suivante :

$$\Delta\rho^i_{huber} = \delta(\mathbf{X}^i_{sat} - \mathbf{X}_{huber}) \qquad (1)$$

dans laquelle :

$\mathbf{X}^i_{sat}$ représente la position du i-ème satellite, ladite position étant par exemple communiquée au récepteur en utilisant un canal de signalisation ;

$\delta(\mathbf{X}^i_{sat} - \mathbf{X}_{huber})$ représente l'écart entre l'estimation de la différence ($\mathbf{X}^i_{sat} - \mathbf{X}_{huber}$) et la pseudo-distance mesurée $\rho_i$.

La position améliorée $\mathbf{X}_{huber}$ ainsi que le jeu des résidus de pseudo-distances $\Delta\rho^i_{huber}$ ainsi obtenus sont ensuite utilisés pour détecter d'éventuelles mesures aberrantes parmi les N mesures $\rho_i$.

La détection de mesures aberrantes est réalisée en définissant tout d'abord des résidus normés $\Delta r^i_{huber}$, puis en formant des sous-ensembles desdits résidus et en appliquant des tests statistiques à ces sous-ensembles afin de déterminer si une mesure est aberrante ou non.

Les résidus normés $\Delta r^i_{huber}$ peuvent être déterminés en utilisant l'expression suivante :

$$\Delta r^i_{huber} = \Delta\rho^i_{huber} / \sigma_i \qquad (2)$$

dans laquelle $\sigma_i$ représente les variances a priori des erreurs de mesures, un modèle de distribution d'erreur se basant sur une loi gaussienne étant habituellement utilisé.

Des sous-ensembles 105, 106 comportant N-k valeurs de résidus normés $\Delta r^i_{huber}$ sont ensuite formés 111, le paramètre k correspondant au nombre maximum de mesures aberrantes contre lesquelles on veut se prémunir.

Le nombre $\Sigma$ de sous-ensembles ainsi déterminés correspond au nombre de combinaisons de (N-k) mesures parmi N, noté $\Sigma = C[(N-k),N]$. En d'autres termes, les $\Sigma$ sous-ensembles sont toutes les combinaisons comportant N-k résidus.

L'écart type de ces ensembles est ensuite calculé. Parmi ces ensemble, un ensemble appelé sous-ensemble optimal et désigné par l'acronyme SGO est déterminé. Le SGO est l'ensemble dont l'écart type $\sigma_{SEO}$ est le plus faible. La moyenne des résidus normés appartenant au SEO est déterminée et notée $\mu_{SGO}$. La détermination de l'ensemble SEO permet de lister les k mesures ayant la probabilité la plus importante d'être erronées ainsi que d'avoir un sous-ensemble de référence réputé fiable.

Deux tests statistiques sont ensuite appliqués 107, 108 de manière à infirmer ou confirmer le caractère aberrants des mesures.

Un premier test statistique 107 a pour objectif de comparer les N écarts définis par la différence entre les résidus normés $\Delta r^i_{huber}$ et la moyenne $\mu_{SGO}$ avec une valeur de seuil $T_1$. Cette valeur de seuil $T_1$ est déterminée de manière à garantir des objectifs choisis par le concepteur en termes de performance de fausses alarmes et de détection. Ce test peut être formulé, par exemple, en utilisant l'expression suivante :

$$\Delta r^{i}_{huber} - \mu_{SEO} < T_1 \qquad (3)$$

Si l'inégalité (3) pour l'indice i est vérifiée, alors la i-ème mesure $\rho_i$ n'est pas considérée comme aberrante. Dans ce cas, elle est conservée pour recalculer une position $\mathbf{X}_{cln}$, appelée position propre. Cette position propre est déterminée de préférence en utilisant la méthode des moindres de carrés, mais une autre méthode d'estimation comme par exemple une méthode d'estimation robuste peut être utilisée.

Un second test statistique 108 permettant d'affiner la correction de position est ensuite appliqué. Pour cela, un nouveau jeu de N résidus $\Delta r^{i}_{cln}$ de pseudo distances normées est formé. Les résidus de ce jeu sont définis, par exemple, en utilisant l'expression suivante :

$$\Delta r^{i}_{cln} = \delta \, (\mathbf{X}^{i}_{sat} - \mathbf{X}_{cln}) \, / \, \sigma_i \qquad (4)$$

dans laquelle $\delta(\mathbf{X}^{i}_{sat} - \mathbf{X}_{cln})$ représente l'écart entre l'estimation de la différence $\mathbf{X}^{i}_{sat} - \mathbf{X}_{cln}$ et la pseudo-distance mesurée $\rho_i$.

L'écart type $\sigma_{cln}$ de cet ensemble est déterminé. L'écart entre les résidus $\Delta r^{i}_{cln}$ et les résidus $\Delta r^{i}_{huber}$ est déterminé afin de quantifier l'apport du filtrage des mesures résultant du premier test 107 à la position nouvellement estimée $\mathbf{X}_{cln}$.

Si cet écart est inférieur à une valeur de seuil $T_2$, les mesures sont conservées. La valeur de seuil $T_2$ est choisie en fonction des performances de fausses alarmes et de détection souhaitées. En d'autres termes, ce test peut être résumé en utilisant l'expression suivante :

$$| \, \Delta r^{i}_{cln} - \Delta r^{i}_{huber} \, | \ < T_2 \qquad (5)$$

Si l'inégalité (5) est vérifiée, alors la mesure i est réputée valide, c'est-à-dire non aberrante et est conservée.

Les mesures conservées suite à l'application des deux tests sont utilisées pour déterminer 109 une position dite robuste $\mathbf{X}_{rob}$. Pour cela, une méthode de moindres carrés classique peut être utilisée. Un autre type d'estimation peut aussi être utilisé.

L'estimation des rayons de protection 110 peut ensuite se faire en utilisant des méthodes existantes en tenant compte du nombre de mesures retenues. A titre d'exemple, les algorithmes d'estimation du rayon utilisés dans le cadre des méthodes RAIM de type LS-RAIM (Least-Square RAIM) et de type méthode de séparation des solutions MHSS (Multiple Hypothesesis Separate Solutions) peuvent être utilisées.

Ainsi, l'application des étapes décrites précédemment permet d'obtenir une solution de position corrigée si une erreur dans les mesures d'entrée $\rho_i$ est détectée. Une valeur de rayon de protection est également disponible, ce qui permet de garantir la solution de position $\mathbf{X}_{rob}$.

## Revendications

1. Procédé de correction d'estimation de position, une position améliorée $\mathbf{X}_{huber}$ étant déterminée par application d'un algorithme d'estimation robuste (104) utilisant N mesures (102) de pseudo-distances $\rho_i$ correspondant à la distance mesurée entre un récepteur de navigation et N satellites ainsi qu'une estimation $\mathbf{X}_{prim}$ de la position dudit récepteur (103) réalisée par ledit récepteur, **caractérisé en ce qu'**il comporte au moins les étapes suivantes :

   - détermination de valeurs de résidus normés $\Delta r^{i}_{huber}$ à partir des résidus $\Delta \rho^{i}_{huber}$ de pseudo-distances des mesures $\rho_i$ ;
   - détermination (111) de $\Sigma$ sous-ensembles (105, 106), un sous-ensemble comportant N-k valeurs de résidus

normés $\Delta r^i_{huber}$, k étant un entier strictement supérieur à 1 ;
- sélection du sous-ensemble SEO dont l'écart type $\sigma_{SEO}$ est le plus faible ;
- sélection de mesures non aberrantes (107), une mesure étant sélectionnée si la différence entre les résidus normés $\Delta r^i_{huber}$ et la moyenne $\mu_{SGO}$ des résidus normés du sous-ensemble SEO est inférieure à une valeur de seuil prédéfinie $T_1$ ;
- détermination d'une estimation corrigée $X_{cln}$ de la position à partir des mesures sélectionnées.

2.  Procédé selon la revendication 1 **caractérisé en ce que** l'algorithme d'estimation robuste est l'algorithme de Huber.

3.  Procédé selon la revendication 2 **caractérisé en ce que** l'algorithme de Huber est initialisé en utilisant la position $\mathbf{X}_{prim}$.

4.  Procédé selon l'une quelconque des revendications précédentes **caractérisé en ce que** les résidus $\Delta \rho^i_{huber}$ sont déterminés en utilisant l'expression suivante :

$$\Delta \rho^i_{huber} = \delta(\mathbf{X}^i_{sat} - \mathbf{X}_{huber})$$

dans laquelle :

$\mathbf{X}^i_{sat}$ représente la position du i-ème satellite, ladite position étant par exemple communiquée au récepteur en utilisant un canal de signalisation ;
$\delta(\mathbf{X}^i_{sat} - \mathbf{X}_{huber})$ représente l'écart entre l'estimation de la différence $(\mathbf{X}^i_{sat} - \mathbf{X}_{huber})$ et la pseudo-distance mesurée $\rho_i$.

5.  Procédé selon l'une quelconque des revendications précédentes **caractérisé en ce que** la position $X_{cln}$ est déterminée en utilisant une méthode de type moindres carrés ou une méthode d'estimation robuste.

6.  Procédé selon l'une quelconque des revendications précédentes **caractérisé en ce que** les résidus normés $\Delta r^i_{huber}$ sont déterminés en utilisant l'expression suivante :

$$\Delta r^i_{huber} = \Delta \rho^i_{huber} / \sigma_i$$

dans laquelle :

$\sigma_i$ représente les variances a priori des erreurs de mesures.

7.  Procédé selon l'une quelconque des revendications précédentes **caractérisé en ce que** le nombre $\Sigma$ de sous-ensembles correspond au nombre de combinaisons de (N-k) mesures parmi N.

8.  Procédé selon l'une quelconque des revendications précédentes **caractérisé en ce qu'**il comporte une étape de détermination de N résidus $\Delta r^i_{cln}$ de pseudo distances, l'expression suivante étant utilisée :

$$\Delta r^i_{cln} = \delta (\mathbf{X}^i_{sat} - \mathbf{X}_{cln}) / \sigma_i$$

dans laquelle
$\delta (\mathbf{X}^i_{sat} - \mathbf{X}_{cln})$ représente l'écart entre l'estimation de la différence $(\mathbf{X}^i_{sat} - \mathbf{X}_{cln})$ et la pseudo-distance mesurée $\rho_i$.

**9.** Procédé selon la revendication 7 **caractérisé en ce qu'**il comporte une deuxième étape (108) de sélection de mesures $\rho_i$ parmi les mesures déjà sélectionnées, lesdites mesures étant sélectionnées si l'expression suivante est vérifiée :

$$| \Delta r^i_{cln} - \Delta r^i_{huber} | < T_2$$

dans laquelle $T_2$ est une valeur de seuil prédéterminée.

**10.** Procédé selon la revendication 8 **caractérisé en ce qu'**une estimation robuste de position $X_{rob}$ est estimée en appliquant la méthode des moindres carrés aux mesures sélectionnées durant la deuxième étape de sélection (108).

**11.** Procédé selon l'une quelconque des revendications 9 ou 10 **caractérisé en ce qu'**une valeur de rayon de détection (110) est déterminée sur la base des mesures sélectionnées durant la deuxième étape de sélection (108).

**12.** Récepteur de navigation **caractérisé en ce qu'**il met en oeuvre le procédé selon l'une quelconque des revendications précédentes.

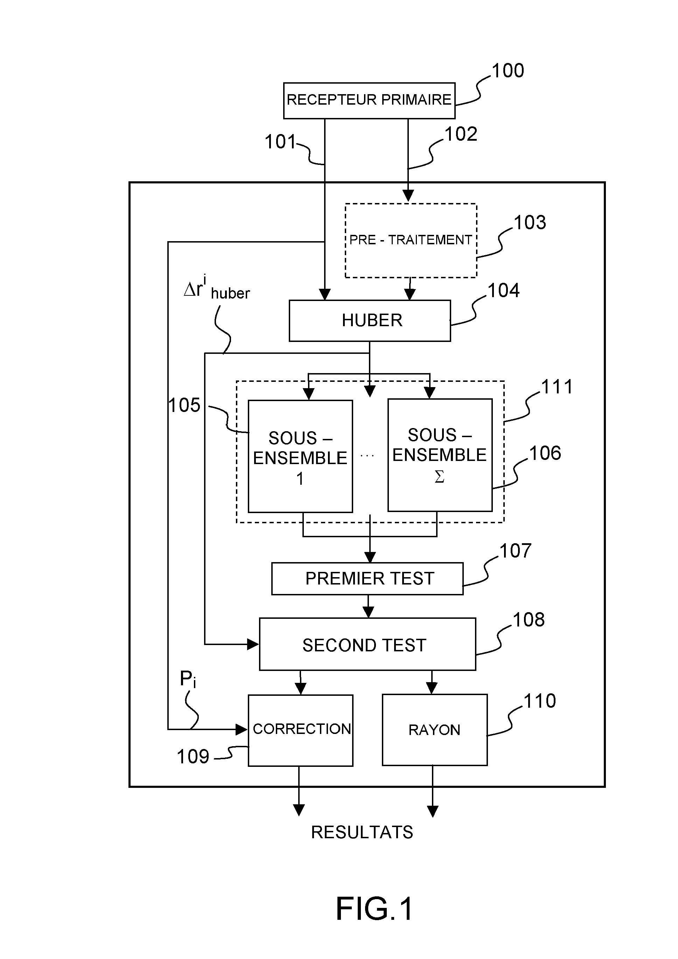

FIG.1

Europäisches
Patentamt

European
Patent Office

Office européen
des brevets

**RAPPORT DE RECHERCHE EUROPEENNE**

Numéro de la demande

EP 11 18 0512

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2009/147242 A1 (THALES SA [FR]; VAN DEN BOSSCHE MATHIAS [FR]; KAROUBY PHILIPPE [FR]; M) 10 décembre 2009 (2009-12-10) * le document en entier * ----- | 1-7,12 | INV. G01S19/20 |
| A | KUUSNIEMI H ET AL: "User-level reliability monitoring in urban personal satellite-navigation", IEEE TRANSACTIONS ON AEROSPACE AND ELECTRONIC SYSTEMS, IEEE SERVICE CENTER, PISCATAWAY, NJ, US, vol. 43, no. 4, 1 octobre 2007 (2007-10-01), pages 1305-1318, XP011203401, ISSN: 0018-9251 * le document en entier * ----- | 1,12 | |
| A,D | X-W CHANG ET AL: "Huber's M-estimation in relative GPS positioning: computational aspects", JOURNAL OF GEODESY ; CONTINUATION OF BULLETIN GÉODÉSIQUE AND MANUSCRIPTA GEODAETICA, SPRINGER, BERLIN, DE, vol. 79, no. 6-7, 1 août 2005 (2005-08-01), pages 351-362, XP019324870, ISSN: 1432-1394, DOI: DOI:10.1007/S00190-005-0473-Y * le document en entier * ----- | 1,12 | DOMAINES TECHNIQUES RECHERCHES (IPC) G01S |

Le présent rapport a été établi pour toutes les revendications

| Lieu de la recherche | Date d'achèvement de la recherche | Examinateur |
|---|---|---|
| Munich | 2 décembre 2011 | Kern, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 18 0512

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-12-2011

| Document brevet cité au rapport de recherche | Date de publication | Membre(s) de la famille de brevet(s) | Date de publication |
|---|---|---|---|
| WO 2009147242 A1 | 10-12-2009 | AU 2009254578 A1 | 10-12-2009 |
| | | CA 2726929 A1 | 10-12-2009 |
| | | CN 102057291 A | 11-05-2011 |
| | | EP 2318854 A1 | 11-05-2011 |
| | | FR 2932277 A1 | 11-12-2009 |
| | | JP 2011522269 A | 28-07-2011 |
| | | KR 20110015635 A | 16-02-2011 |
| | | US 2011122022 A1 | 26-05-2011 |
| | | WO 2009147242 A1 | 10-12-2009 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **X. W. CHANG ; Y. GUO.** Huber's M-estimation in relative GPS positioning: computational aspects. *Journal of Geodesy,* 2005, vol. 79 (6-7), 351-362